# EUROPEAN PATENT SPECIFICATION

(11) **EP 1 329 972 B1**
(45) Date of publication and mention of the grant of the patent: **08.06.2005**
(21) Application number: 03250087.8
(22) Date of filing: 08.01.2003
(51) Int. Cl.: H01M 8/06, H01M 10/42, H01M 8/04, C01B 3/06

(54) **Fuel cartridge and reaction chamber**
Brennstoffpatrone mit Reaktionskammer
Cartouche pour combustibles avec chambre de réaction

(30) Priority: 22.01.2002 US 56647
(43) Date of publication of application: 23.07.2003
(73) Proprietor: Hewlett-Packard Company, Palo Alto, CA 94304 (US)
(72) Inventor: Prasad, Ravi, Corvallis, OR 97330 (US); Mann, L. Chris, Corvallis, OR 97330 (US); Tsang, Jospeh W., Corvallis, OR 97330 (US)
(74) Representative: Jackson, Richard Eric

(56) References cited:
- WO-A-00/24076
- GB-A- 2 283 235
- US-A- 3 450 500
- US-A- 6 129 861
- PATENT ABSTRACTS OF JAPAN vol. 2002, no. 03, 3 April 2002 (2002-04-03) & JP 2001 313047 A (YUASA CORP), 9 November 2001 (2001-11-09)
- PATENT ABSTRACTS OF JAPAN vol. 2000, no. 24, 11 May 2001 (2001-05-11) & JP 2001 185184 A (TOSHIBA CORP), 6 July 2001 (2001-07-06)

## Description

### BACKGROUND OF THE INVENTIONS

### Field of the Inventions

The present inventions are related to fuel cartridges and reaction chambers that may be used, for example, in combination with fuel cells.

### Background

Many devices are fueled by fuel that is stored in a fuel cartridge. Although the present inventions are not limited to fuel cartridges that are used in conjunction with any particular type of device, fuel cells are one example of a device that may consume fuel stored in a fuel cartridge, and the present inventions are discussed in the context of fuel cells for illustrative purposes only. Fuel cells convert fuel and oxidant into electricity and a reaction product. Fuel cells that employ hydrogen as the fuel and oxygen as the oxidant, for example, produce water and/or water vapor as the reaction product. Fuel cartridges used in conjunction with fuel cells typically store pressurized gaseous fuel or a fuel containing substance, such as a chemical compound, that releases the gaseous fuel under certain conditions.

The inventors herein have determined that conventional fuel cartridges, especially those used in conjunction with fuel cells, are susceptible to improvement. More specifically, the inventors herein have determined that it can be undesirable to store large amounts of gaseous fuel (such as hydrogen) in a fuel cartridge because such storage can raise safety concerns and provide less than optimal energy density. The inventors herein have also determined that, in those instances where fuel containing substances are stored in a fuel cartridge, conventional apparatus for causing the gaseous fuel to be released do not provide precise control over the process. This lack of control can lead to the release of more fuel than is required by the fuel cell, which also raises safety concerns. Thus, the inventors herein have determined that it would be desirable to provide fuel cartridges that facilitate precise control over the conditions associated with the release of gaseous fuel from the fuel containing substance.

Conventional reaction chambers, which are sometimes used to release gaseous fuel from a fuel containing substance, rely on gravity for certain aspects of their operation. As such, they must be maintained in a predetermined orientation to function properly. The inventors herein have determined that, because they are orientation dependent, conventional reaction chambers are not particularly useful in conjunction portable devices, especially those which are frequently used in a variety of orientations. This deficiency has also limited the application of those fuel cell systems which rely on reaction chambers to release gaseous fuel from a fuel containing substance. The inventors herein have, therefore, further determined that it would be advantageous to provide reaction chambers that will operate in any orientation because this would allow them to be used in conjunction with portable devices, including those which are often used in a variety of orientations, and will facilitate the use of fuel cell systems in portable devices.

### BRIEF DESCRIPTION OF THE DRAWINGS

Detailed description of preferred embodiments of the inventions will be made with reference to the accompanying drawings.
Figure 1 is a plan, partial section view of a fuel cartridge in accordance with a preferred embodiment of a present invention.
Figure 2 is a section view taken along line 2-2 in Figure 1.
Figure 3 is a plan view of a fuel cartridge in accordance with a preferred embodiment of a present invention connected to a pump.
Figure 4 is a plan, partial section view of a portion of fuel cartridge in accordance with a preferred embodiment of a present invention.
Figure 5 is a plan, partial section view of a fuel cartridge in accordance with a preferred embodiment of a present invention.
Figure 6 is a side, section view of a portion of the fuel cartridge illustrated in Figure 5.
Figure 7 is a section view of a connector arrangement in accordance with a preferred embodiment of a present invention in a disconnected state.
Figure 8 is a section view of the connector arrangement illustrated in Figure 7 in a connected state.
Figure 9 is a partial section view of a reaction chamber in accordance with a preferred embodiment of a present invention.
Figure 10 is a schematic block diagram of a host device and fuel cartridge in accordance with a preferred embodiment of a present invention.
Figure 11 is a schematic block diagram of a host device and fuel cartridge in accordance with a preferred embodiment of a present invention.

### DETAILED DESCRIPTION OF THE PREFERRED EMBODIMENTS

A fuel cartridge in accordance with one of the inventions herein includes a fuel reservoir, a reaction chamber including a catalyst, and a passive structure adapted to resist fluid flow from the fuel reservoir to the reaction chamber. Such a fuel cartridge provides a number of advantages over conventional fuel cartridges. Most notably, the passive structure will prevent the fuel containing substance from entering the reaction chamber until a predetermined pressure gradient is formed across the passive structure. The release of gaseous fuel from the fuel containing substance may, therefore, be precisely controlled by controlling the pressure at the passive structure. The present inventions also obviate the need to store compressed gaseous fuel and, accordingly, provide higher levels of safety and energy density than conventional fuel cartridges that store compressed gaseous fuel.

A reaction chamber in accordance with one of the inventions herein includes an external housing, defining a first reactant inlet, a liquid outlet and a gas outlet, and a substantially gas permeable/substantially liquid impermeable structure that separates the first reactant inlet and the liquid outlet from the gas outlet. The substantially gas permeable/substantially liquid impermeable structure includes an inlet operably connected to the external housing first reactant inlet and a liquid outlet operably connected to the external housing liquid outlet. Such a reaction chamber provides a number of advantages over conventional reaction chambers. For example, the orientation of the reaction chamber will not hinder the release of a gaseous product of the reaction that occurs therein. More specifically, gas (and gas pressure) will build within the area between the substantially gas permeable/substantially liquid impermeable structure and the gas outlet as the reaction proceeds. The pressure will cause the gas to exit via the gas outlet regardless of the orientation of the reaction chamber. In the context of fuel cartridges, this is particularly useful because the host device may be movable and operated in a variety of orientations.

A device in accordance with one of the inventions herein includes an apparatus that consumes electrical power, a fuel cell and a reaction chamber including an inlet adapted to be connected to a fuel source, a catalyst, and a fuel outlet connected to the fuel cell. The reaction chamber may, for example, be adapted to produce gaseous fuel from a fuel containing substance. This allows the device to be used in combination with fuel cartridges do not have their own catalyst chambers.

The following is a detailed description of the best presently known modes of carrying out the inventions. This description is not to be taken in a limiting sense, but is made merely for the purpose of illustrating the general principles of the inventions. Additionally, although the inventions herein are discussed in the context of fuel cells and host devices powered by fuel cells, the fuel cartridges and reaction chambers described herein are not limited solely to use with fuel cells. With respect to fuel cells, the present inventions are applicable to a wide range of fuel cell technologies, including those presently being developed or yet to be developed. Thus, although various exemplary fuel cartridges are described below with reference to a proton exchange membrane (PEM) fuel cell, other types of fuel cells, such as solid oxide fuel cells, are equally applicable to the present inventions. It should also be noted that detailed discussions of fuel cell structures, the structures of other fuel consuming devices, and the internal operating components of host devices powered thereby that are not pertinent to the present inventions have been omitted for the sake of simplicity.

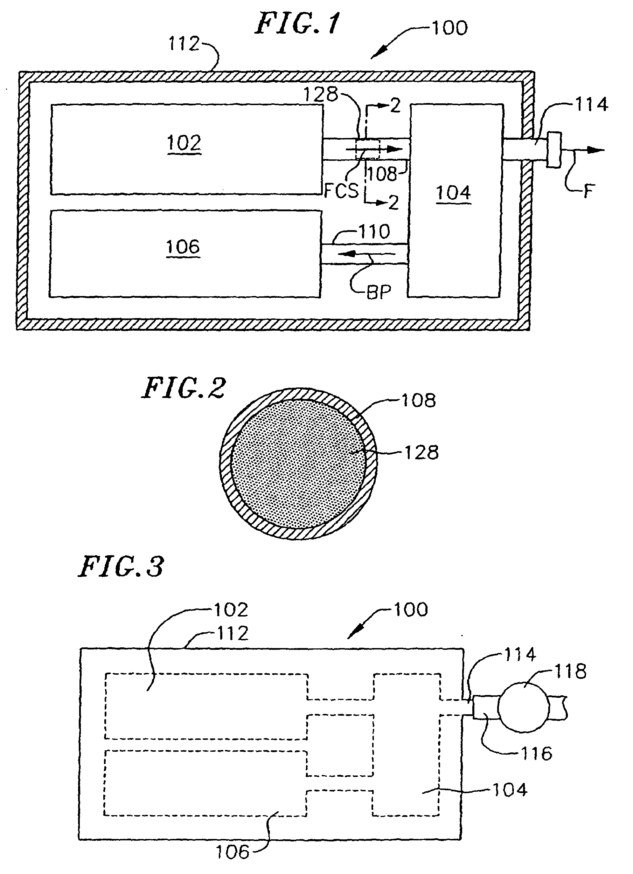

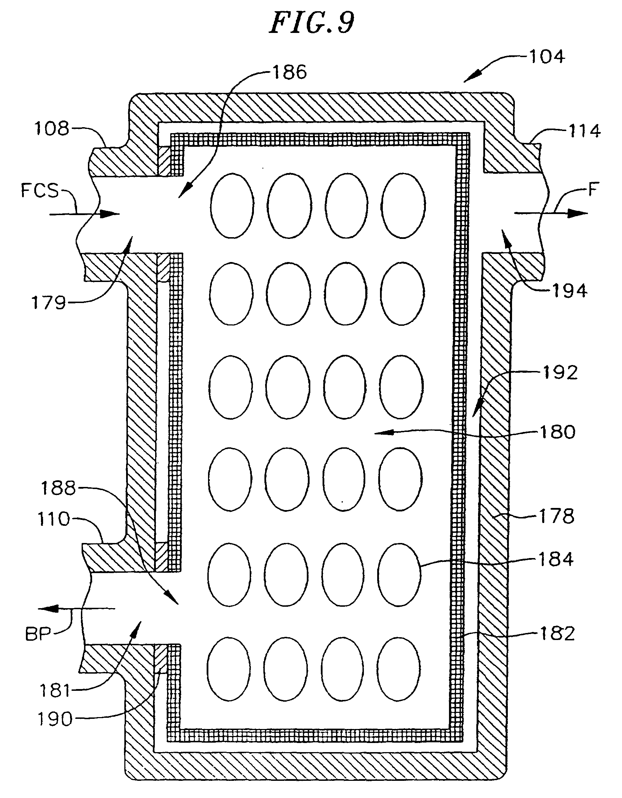

As illustrated for example in Figure 1, an exemplary fuel cartridge 100 includes a fuel reservoir 102 that stores a fuel containing substance FCS, a reaction chamber 104 that stores a catalyst, and a by-product reservoir 106 that stores the by-product BP of the reaction that occurs within the reaction chamber. The fuel containing substance FCS is supplied to the reaction chamber 104 by way of a inlet line 108, while the by-product BP is transferred to the by-product reservoir 106 by way of an outlet line 110. The inlet and outlet lines 108 and 110 are preferably tubular structures that define open regions through which the fuel containing substance FCS and by-product BP flow. The fuel F and by-product BP may be separated from one another within the reaction chamber 104 in any suitable manner including, for example, the manner described below with reference to Figure 9. A cartridge housing 112 is also provided to protect the fuel reservoir 102, reaction chamber 104 and a by-product reservoir 106, and to protect the host device from any leakage therefrom.

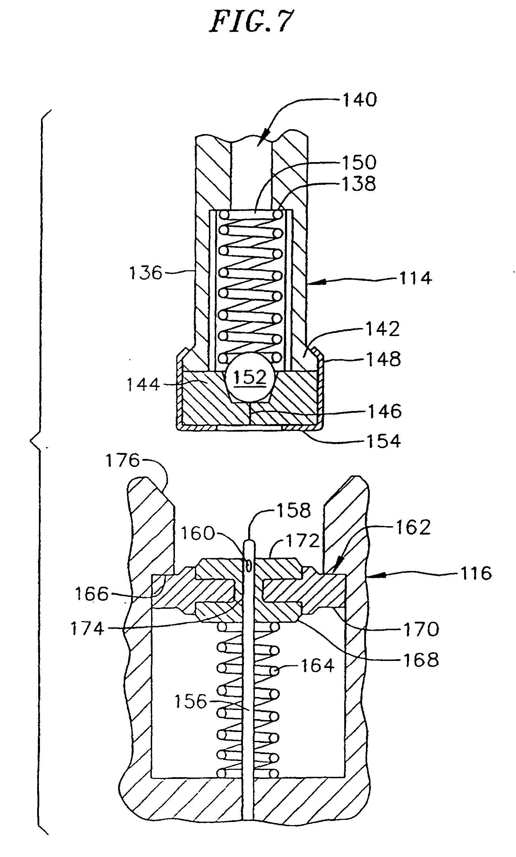

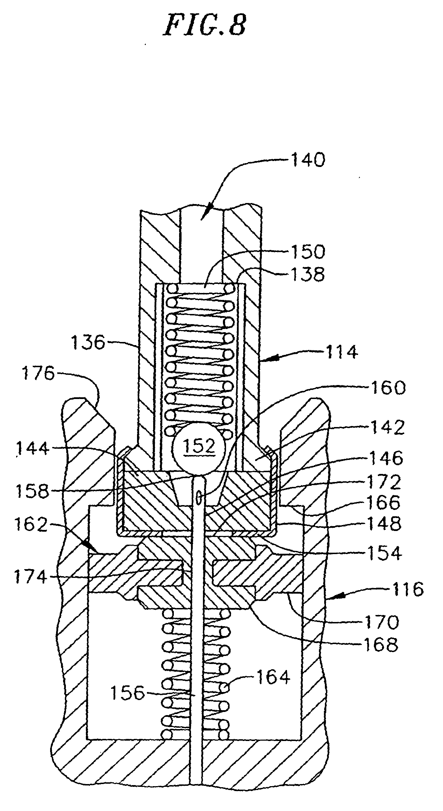

Fuel F that is released from the fuel containing substance FCS will exit the fuel cartridge 100 by way of an outlet connector 114. The connector 114 also acts as a cap to prevent the release of fuel unless until it mates with a corresponding host device inlet connector 116 in the manner described below with reference to Figures 7 and 8.

Although the present inventions are not limited to any particular fuel or fuel containing substance, one type of fuel containing substance is fuel containing chemical compounds that are used to provide hydrogen (the fuel used in the exemplary PEM fuel cell). Sodium borohydride, for example, is a stable compound in an aqueous solution that will readily form hydrogen in the presence of one or more transition metal catalysts, such as ruthenium (Ru), as illustrated by the following chemical equation: NaBH₄ + 2 H₂O → 4 H₂ + NaBO₂. The solution should also contain a sufficient concentration of sodium hydroxide to prevent the formation of any appreciable amount of hydrogen during storage. Other exemplary fuel containing substances include lithium hydride, sodium hydride or any alkali metal hydride, while other exemplary catalysts include nickel, palladium and ruthenium.

The exemplary fuel reservoir 102, reaction chamber 104, by-product reservoir 106 and cartridge housing 112 may be formed from any suitable material or materials. In exemplary embodiments, in which sodium borohydride is used to produce hydrogen gas, the fuel and by-product reservoirs 102 and 106 and reaction chamber 104 are each cylindrical in shape and formed from plastics such as polyolefins including, but not limited to, polyethylene and polypropylene. Non-corrosive metals are another material from which the fuel and by-product reservoirs 102 and 106 and reaction chamber 104 may be manufactured. The reservoirs 102 and 106 and reaction chamber 104 may also be rectangular in shape. Alternatively, the fuel cartridge may simply include a housing similar to housing 112 and internal partition walls that separate the interior of the housing into a number of distinct chambers.

The size of the exemplary fuel cartridge 100 would, of course, vary in accordance with factors such as the size of the host device and the desired amount of fuel containing substance to be stored. Although the present inventions are not limited to any particular size, the exemplary fuel cartridge 100, which produces hydrogen from sodium borohydride solution and is suitable for use in a personal digital assistant ("PDA"), carries about 10 milliliter (ml) of a sodium borohydride solution. It is contemplated that, depending on the application and type of fuel containing substance, the size of the cartridge may be varied to accommodate from less than 10 ml of fuel containing substance for a small low power host device to 100 ml or more for a larger high power host device. Of course, these volumes may be increased or decreased as needed.

The exemplary fuel cartridge 100 and the portion of the host device that receives the fuel cartridge will preferably have corresponding shapes and a mechanical keying apparatus (not shown), such as a rail and slot arrangement, to prevent the fuel cartridge from being connected improperly and, in many instances, prevent the wrong type of fuel cartridge from being connected the host device. A suitable locking device, such as a latch (not shown), may also be provided to hold the fuel cartridge in place. A relatively small fuel cartridge 100 (as compared to the host device) could be inserted into the host device, while relatively large fuel cartridges could be mounted on the exterior. A housing 112 of an exteriorly mounted fuel cartridge for use with a PDA could, for example, be about 3 inches x about 6 inches x about 0.5 inch.

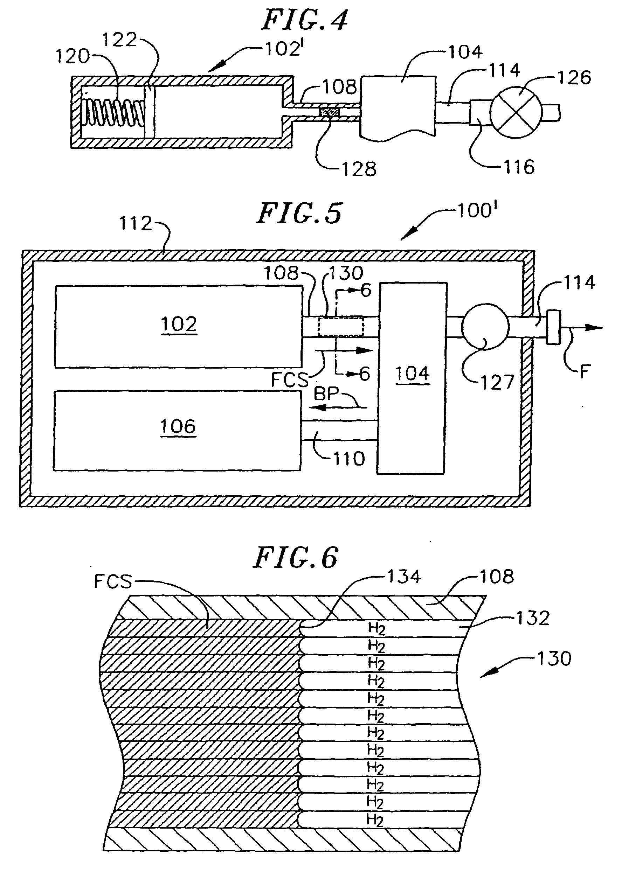

In some exemplary implementations, and as illustrated for example in Figure 3, the fuel containing substance may be drawn out of the fuel reservoir 102 by a pump 118 (such as a pump driven by an electric motor) that is associated with the host device and located downstream from the host device inlet connector 116. In other implementations, the fuel cartridge 100 may be provided with its own source of potential energy. As illustrated for example in Figure 4, an exemplary fuel reservoir 102' is provided with a spring 120 and pusher 122 that together form an internal pump that applies pressure to the fuel containing substance within a storage area 124. A shut-off valve 126 will be employed here in place of the pump 118. The exemplary fuel cartridge 100' illustrated in Figure 5, which is substantially similar to exemplary fuel cartridge 100 (and like elements are represented with like reference numerals), includes an internal electric motor driven pump 127 along the line associated with the connector 114. Here, the fuel cartridge 100' will be electrically connected to the host device, in addition to being mechanically/fluidly connected, so that the pump 127 may be controlled by the host device. Control of the pump 118, shut-off valve 126 and pump 127 are discussed in greater detail below.

The exemplary by-product reservoir 106 may, if desired, include a device that creates a vacuum and draws the by-product into reservoir. Suitable vacuum creation devices may include, for example, a spring and pusher arrangement similar to that illustrated in Figure 4, albeit with the spring on the opposite side of the pusher.

Fuel cartridges in accordance with the present inventions may also be provided with a passive structure that, in the absence of a predetermined threshold pressure gradient across the structure, will prevent the fuel containing substance from coming into contact with the catalyst. The passive structure in the exemplary fuel cartridge 100 illustrated in Figures 1-3 is a porous structure 128. The capillary forces created by the pores of the porous structure 128, and back pressure from any previously released hydrogen within the reaction chamber 104, prevent the fuel containing substance FCS in the reservoir 102 from coming into contact with the catalyst in the reaction chamber 104 when the pump 118 is not operating. Operation of the pump 118 will draw in the previously created hydrogen and create a vacuum force (or "pressure gradient") across the porous structure 128 that is sufficient to overcome the capillary forces (i.e. a threshold value associated with that particular porous structure) and pull the fuel containing substance FCS into the reaction chamber 104. The production of hydrogen or other fuel F may, therefore, be controlled by controlling the operation of the pump 118 because the fuel containing substance FCS will only react with the catalyst, and fuel will only be produced, when the pump is operating.

The exemplary embodiment illustrated in Figure 4 operates in similar fashion. Here, however, the spring 120 and pusher 122 supply a constant force to the fuel containing substance that is sufficient to overcome the capillary forces created by the pores of the porous structure 128. When the shut-off valve 126 is closed, the combination of the capillary forces created by the pores and back pressure from the previously released hydrogen within the reaction chamber 104 will prevent the fuel containing substance in the reservoir 102 from coming into contact with the catalyst in the reaction chamber 104. Opening the shut-off valve 126 allows released hydrogen to flow into the fuel cell, thereby reducing the back pressure to a level that will allow the fuel containing substance FCS to cross the porous structure 128. The production of fuel F may, therefore, be controlled by controlling the shut-off valve 126 because the fuel containing substance FCS will only react with the catalyst, and fuel will only be produced, when the valve is open.

Suitable materials for the porous structure 128 include, but are not limited to, membranes, foams, ceramics, porous filters formed by sintering fine polymer particles, spun filters and woven filters. Both organic and inorganic materials may be employed. Variables such as the material's affinity for liquid (i.e. whether it is hydrophilic or hydrophobic), selectivity, permeability, porosity and density should also be considered. Pore diameter, another variable that should be taken into account, will preferably range from 0.001 micron to 100 microns. Although the material may vary according to the intended application, one example of a suitable material is CELGARD® polypropylene hydrophobic membrane material having a pore diameter of 0.03 microns.

Another exemplary passive structure is employed in the exemplary fuel cartridge 100' illustrated in Figures 5 and 6. More specifically, the exemplary fuel cartridge 100' is provided with a capillary structure 130 that includes a plurality of axially aligned, small diameter capillaries 132. The capillaries 132 are preferably about 10 microns to about 400 microns in diameter and fabricated from fiber filters, hollow filter fibers, or porous plastics with axially aligned pores. The pore sizes and materials may, of course, vary as applications require. The capillary forces created by the interfacial surface tension between the fuel containing substance FCS and the individual capillaries 132, in combination with the back pressure from residual hydrogen within the reaction chamber 104, results in the formation of a front 134 and prevents the fuel containing substance in the reservoir 102 from coming into contact with the catalyst in the reaction chamber 104 when the pump 127 is not operating. Operation of the pump 127 will draw in the residual hydrogen from the reaction chamber 104 and pores 132 and create a vacuum force across the capillary structure 130 that is sufficient to overcome the capillary forces (i.e. a threshold value particular to that particular capillary structure) and pull the fuel containing substance into the reaction chamber. The production of hydrogen or other fuel F may, therefore, be controlled by controlling the operation of the pump 127 because the fuel containing substance FCS will only react with the catalyst, and fuel will only be produced, when the pump is operating.

Although the present inventions are not limited to any particular connector arrangement, the preferred arrangement is a self-sealing inlet/outlet connector arrangement that prevents leakage. With such a self-sealing arrangement, seals will be maintained at the outlet connector 114 on the fuel cartridge 100 and the host device inlet connector 116 when the two are connected to, and disconnected from, one another as the fuel cartridge is received by, and removed from, the host device. Once the sealed connection is made, fuel will be allowed to flow from the reaction chamber 104 to a fuel cell or other fuel consuming device under the conditions described below. Preferably, the connection will occur automatically when the fuel cartridge 100 is received by (e.g. inserted into or connected to) the host device to connect the fuel cartridge to the associated fuel consuming device.

One example of a self-sealing fuel inlet/outlet connector arrangement that may be used in conjunction with the present inventions is illustrated in Figures 7 and 8. The exemplary fuel outlet connector 114 includes a hollow cylindrical boss 136 having an inwardly projecting edge 138 and lumen 140 that opens into the reaction chamber 104. The end 142 includes a compliant septum 144 with a slit 146 that is secured by a crimp cap 148. A spring 150 (or other biasing device) and a sealing ball 152 are positioned between the compliant septum 144 and the inwardly projecting edge 138. The length of the spring 150 is such that the spring biases the sealing ball 152 against the septum 144 to form a seal. The end 154 of the crimp cap 148 includes an opening that is aligned with the septum slit 146.

In the exemplary implementation illustrated in Figures 7 and 8, the host device inlet connector 116 includes a needle 156 having a closed end 158, a lateral hole 160, and a bore that extends from the lateral hole axially through the needle. A sliding collar 162, which surrounds the needle 156 and is biased by a spring 164 (or other biasing device) against an annular stop 166, includes a compliant sealing portion 168 and a substantially rigid retaining portion 170. The compliant sealing portion 168 includes an exposed upper surface 172 and an inner surface 174 in contact with the needle 156. In the disconnected position illustrated in Figure 7, the hole 160 is surrounded and sealed by the sealing portion inner surface 174. The inlet connector 116 is also preferably provided with a tapered lead-in portion 176 that guides and centers the outlet connector 114 as it moves into the connected position illustrated in Figure 8.

When the fuel outlet connector 114 is inserted into the inlet connector 116 (Figure 8) in order to establish a connection between the fuel cartridge 100 and the host device, the closed end 158 of the needle 156 will pass through the septum slit 146. The septum 144 should, therefore, be compliant enough to allow the needle 156 to be inserted without large insertion forces, yet stiff enough to provide a tight seal when the needle is removed. As the needle 156 passes through the septum 144 into the cylindrical boss 136, the sliding collar 162 and sealing ball 152 will be urged in opposite directions until the hole 160 is exposed. This establishes communication between the fuel cartridge 100 and the host device. Additional details concerning the exemplary connector arrangement illustrated in Figures 7 and 8 may be found in U.S. Patent No. 6,015,209, which is assigned to the Hewlett-Packard Company and incorporated herein by reference.

The exemplary reaction chamber 104 is configured such that the orientation of the reaction chamber will not hinder the release of gaseous fuel (hydrogen in the illustrated implementations). Turning to Figure 9, the exemplary reaction chamber 104 includes a external housing 178, which has a fuel containing substance inlet 179 and a by-product outlet 181, and an internal reaction region 180 that is bounded by a gas permeable/liquid impermeable catalyst housing 182. Suitable gas permeable/liquid impermeable materials for the catalyst housing 182 include porous hydrophobic membrane materials such as, for example, GORE-TEX(™) material and CELGARD(™) hollow fiber membrane material. A catalyst consisting of, for example, one or more catalyst members is positioned within the catalyst housing 182 for reaction with the fuel containing substance. Preferably, the catalyst is in the form of a plurality of porous carbon beads 184 that are coated with catalyst material. The catalyst housing 182 is also provided with an inlet opening 186 and an outlet opening 188 that are each sealed with a gasket 190. The inner diameter of the housing 178 is slightly larger than the outer diameter of the catalyst housing 182, thereby creating a relatively small gas collection area 192. A gas outlet 194 allows gas to flow from the gas collection area 192 into the outlet connector 114.

With respect to operation of the exemplary reaction chamber 104, the fuel containing substance FCS (sodium borohydride in the illustrated embodiment) enters the catalyst housing 182 by way of the inlet opening 186 and is exposed to the catalyst material (ruthenium in the exemplary embodiment) on the beads 184. Gaseous fuel F and liquid by-product BP (hydrogen and sodium borate in the exemplary embodiment) form within the catalyst housing 182. As gas pressure builds, the gaseous fuel F will pass through the catalyst housing 182 into the gas collection area 192 and, ultimately, exit the reaction chamber 104 by way of the gas outlet 194. The hydrophobic catalyst housing 182 will not, however, allow the liquid by-product BP to pass. The liquid by-product BP will instead exit the catalyst housing by way of the outlet 188, and then flow through the outlet line 110 to the by-product reservoir 106. Because the present reaction chamber 104 relies on internal pressure and/or an external vacuum created by a pump such as pump 118 in Figure 3, as opposed to gravity, to separate the gas from the liquid and evacuate the gas, the present reaction chamber will operate regardless of orientation.

In an alternate embodiment, a portion of the inner surface of the external housing 178 may be covered with a sheet of suitable gas permeable/liquid impermeable material that, at a minimum, covers the gas outlet 194 in place of the catalyst housing 182. Here, the catalyst material will simply be placed in the external housing 178 in a manner that will prevent it from entering the inlet and outlet openings 186 and 188. Additionally, although the exemplary external housing 178 and catalyst housing 182 are cylindrical in shape, the present inventions are not so limited and the shapes may vary as desired to suit particular application. For example, a gas permeable/liquid impermeable wall may be used to divide the interior of the external housing 178 into two regions and separate the inlet and outlet openings 186 and 188 from the gas outlet 194.

It should also be noted that the exemplary reaction chamber 104 has application in areas other than fuel cartridges. More particularly, the reaction chamber is useful in any situation where it may be desirable to separate gaseous and liquid reaction products of two or more reactants, especially in those situations where the orientation of reaction chamber may vary during operation.

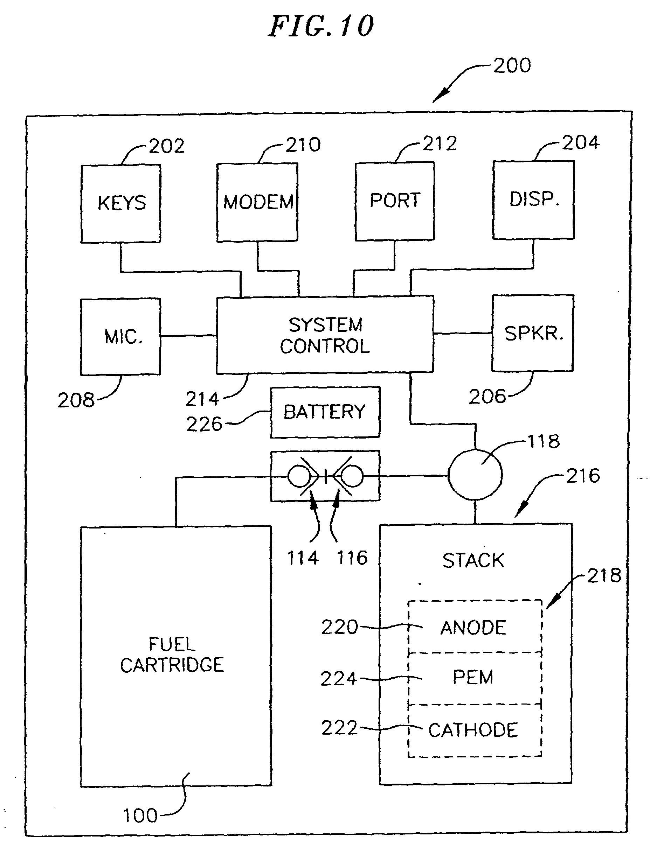

Although the present inventions are not limited to use with any particular host device, the fuel cell powered PDA 200 illustrated in Figure 10 is one example of a device having element that consume electrical power which may be fueled by the present fuel cartridges. The exemplary PDA 200 includes a housing sized to be carried in a human hand that supports a plurality of keys 202, a display 204, a speaker 206 and a microphone 208. A modem 210 and a port 212, such as serial or USB port, may also be provided. Each of the these devices is preferably connected, either directly or indirectly, to a system controller 214 that may include a processor, memory, associated software and/or any other device that is used to control the operations of the PDA such that the PDA perform various functions. Such functions include conventional PDA functions, additional PDA functions which may be developed in the future, and the power control functions (discussed below) associated with the present inventions.

The exemplary PDA 200 is powered by a fuel cell stack 216 consisting of one or more cells 218. Although the present inventions are not limited to any particular type of fuel cell system, the exemplary fuel cells 218 are PEM fuel cells. As is known to those of skill in the art, each cell 218 in the PEM fuel cell 216 stack includes an anode 220 and a cathode 222 separated by a PEM 224. Fuel, such as hydrogen, is supplied to the anode 220 and oxygen supplied to the cathode 222. In the illustrated embodiment, oxygen may be supplied to the fuel cell stack 216 by drawing ambient air into the stack through a vent in the PDA housing. A fan may be provided to facilitate this process. The fuel is electrochemically oxidized at an anode catalyst, thereby producing protons that migrate across the conducting PEM 224 and react with the oxygen at a cathode catalyst to produce a by-product (water vapor and nitrogen in the exemplary embodiment) which carried away from the fuel cell stack 216 by a manifold and vented out of the PDA housing.

The individual cells 218 in the exemplary stack 216 are stacked in electrical series with bipolar plates therebetween that conduct current between the anode 220 of one cell and the cathode 222 of the adjacent cell. The fuel flows from the cartridge 100, through a manifold, and between the anodes and associated plates. The atmospheric air flows between the cathodes and associated plates. The stack 216 is connected to various electrical loads within the PDA 200 such as the display 204 and system controller 214.

The PDA 200 or other host device should also include a battery 226 to provide power prior to the initial transfer of fuel to the fuel cell stack 216. Such power would be used to, for example, power the system controller 214 and pump 118 prior to the production of power by the fuel cell stack 216.

During operation of the exemplary PDA 200, the pump 118 (or valve 126 or pump 127) are controlled by the system controller 214 (or a separate controller) along with the other components and sub-systems (sometimes referred to as "balance of plant" components and systems) that control of the exemplary PEM fuel cell system. A feedback loop is one exemplary method of controlling the production of fuel within the fuel cartridges 100 and 100'. Such control would include the rate of fuel production in addition to whether or not fuel is being produced at all.

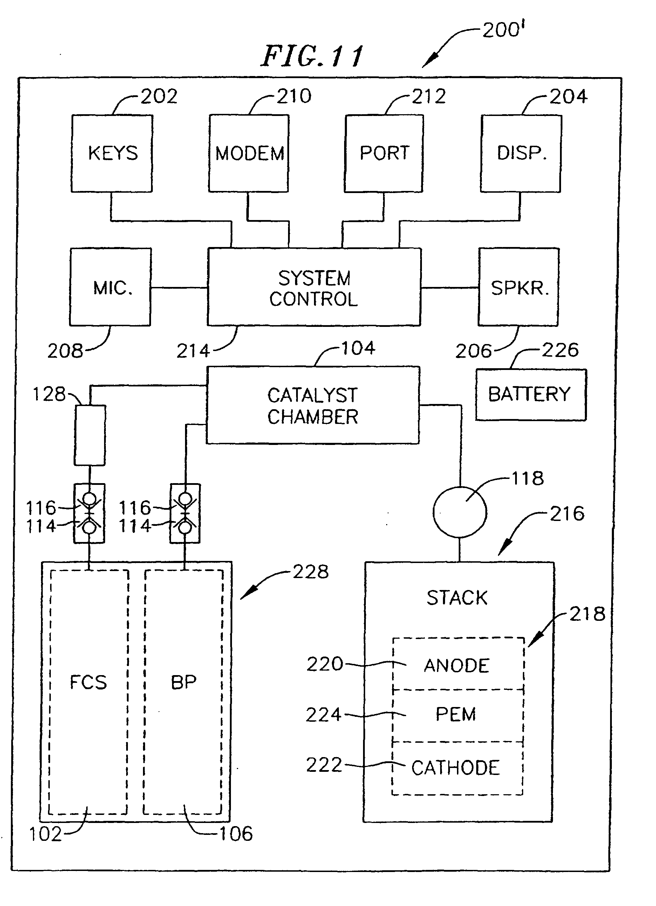

Another exemplary fuel cell powered PDA, which is generally represented by reference numeral 200', is illustrated in Figure 11. PDA 200' is substantially similar in structure and operation to the PDA 200 illustrated in Figure 10 and similar elements are illustrated by similar reference numerals. Here, however, the PDA 200' (or other host device) is provided with a catalyst chamber 104 and a porous structure 128. A fuel cartridge 228, which includes a fuel reservoir 102 for storing a fuel containing substance and a by-product reservoir 106 for storing a by-product, may be connected to the PDA 200' by a pair of connectors 114 which mate with corresponding connectors 116 on the PDA. The fuel reservoir 102 will be connected to the catalyst housing inlet opening 186 (Figure 9) by way of the porous structure 128, while the by-product reservoir 106 will be connected to the catalyst housing outlet opening 188 (Figure 9), when the fuel cartridge 228 is connected to the PDA 200'. The catalyst chamber 104 and a porous structure 128 operate in the respective manners described above.

In an alternate implementation, the porous structure may be located within the catalyst chamber housing at, for example, the inlet opening 186. It should also be noted that the exemplary porous structure and a catalyst chamber arrangement illustrated in Figure 11 is not limited to use with PDAs and may be employed in conjunction with any host device.

Although the present inventions have been described in terms of the preferred embodiments above, numerous modifications and/or additions to the above-described preferred embodiments would be readily apparent to one skilled in the art. By way of example, but not limitation, the various components of the exemplary fuel cartridges described above may be interchanged. Fuel cartridges in accordance with the present inventions may also include a fuel cell by-product reservoir to store by-product from the operation of the fuel cell in those instances where it is not practicable to vent the by-product out of the host device. It is intended that the scope of the present inventions extend to all such modifications and/or additions.

## Claims

1. A fuel cartridge, comprising:
a fuel reservoir (102);
a reaction chamber (104) that stores a catalyst; an open region (108) that connects the fuel reservoir (102) to the reaction chamber (104); and
a passive structure (128,130) located within the open region (108) adapted to resist fluid flow from the fuel reservoir (102) to the reaction chamber (104).

2. A fuel cartridge as claimed in claim 1, wherein the reaction chamber (104) includes an inlet (186) operably connected to the fuel reservoir (102) and a gas outlet (194).

3. A fuel cartridge as claimed in claim 2, further comprising:
a by-product reservoir (106) including a liquid inlet;
wherein the reaction chamber (104) includes a liquid outlet (181) operably connected to the by-product chamber liquid inlet.

4. A fuel cartridge as claimed in claim 1, wherein the open region (108) is defined by a tubular member.

5. A fuel cartridge as claimed in claim 1, wherein the passive structure (128,130) creates capillary forces that resist fluid flow.

6. A reaction chamber for use with at least first and second reactants, the reaction chamber including an external housing (178). defining a first reactant inlet (179), a liquid outlet (181) and a gas outlet (194), and a substantially gas permeable/substantially liquid impermeable structure (182) located swithin the external housing (178) that separates the first reactant inlet (179) and the liquid outlet (181) from the gas outlet (194), **characterized by**
the substantially gas permeable/substantially liquid impermeable structure (182) including an inlet (186) operably connected to the external housing first reactant inlet (179) and a liquid outlet (188) operably connected to the external housing liquid outlet (181).

7. A reaction chamber as claimed in claim 6, wherein the substantially gas permeable/substantially liquid impermeable structure (182) comprises an internal housing formed at least partially from a substantially gas permeable/substantially liquid impermeable material.

8. A reaction chamber as claimed in claim 7, wherein the second reactant is stored within the internal housing.

9. A reaction chamber as claimed in claim 7, wherein the external housing (178) includes an inner surface, the internal housing includes an external surface, and a space (192) is defined between the external housing inner surface and internal housing external surface that is in communication with the external housing gas outlet (194).

10. A reaction chamber as claimed in claim 6, wherein the substantially gas permeable/substantially liquid impermeable structure (182) comprises a porous hydrophobic membrane material.

## Patentansprüche

1. Eine Brennstoffkassette, die folgende Merkmale umfasst:
ein Brennstoffreservoir (102);
eine Reaktionskammer (104), die einen Katalysator speichert;
eine offene Region (108), die das Brennstoffreservoir (102) mit der Reaktionskammer (104) verbindet; und
eine passive Struktur (128, 130), die in der offenen Region (108) angeordnet ist, die angepasst ist, um Fluidfluss von dem Kraftstoffreservoir (102) zu der Reaktionskammer (104) zu widerstehen.

2. Eine Brennstoffkassette gemäß Anspruch 1, bei der die Reaktionskammer (104) einen Einlass (186), der wirksam mit dem Brennstoffreservoir (102) verbunden ist, und einen Gasauslass (194) umfasst.

3. Eine Brennstoffkassette gemäß Anspruch 2, die ferner folgende Merkmale umfasst:
ein Nebenproduktreservoir (106), das einen Flüssigkeitseinlass umfasst;
wobei die Reaktionskammer (104) einen Flüssigkeitsauslass (181) umfasst, der wirksam mit dem Nebenproduktkammerflüssigkeitseinlass verbunden ist.

4. Eine Brennstoffkassette gemäß Anspruch 1, bei der die offene Region (108) durch ein röhrenförmiges Bauglied definiert ist.

5. Eine Brennstoffkassette gemäß Anspruch 1, bei der die passive Struktur (128, 130) Kapillarkräfte erzeugt, die Fluidfluss widerstehen.

6. Eine Reaktionskammer für die Verwendung mit zumindest einem ersten und einem zweiten Reaktanten, wobei die Reaktionskammer ein äußeres Gehäuse (178), das einen ersten Reaktanzeinlass (179), einen Flüssigkeitsauslass (181) und einen Gasauslass (194) definiert, und eine im Wesentlichen gasdurchlässige/im Wesentlichen flüssigkeitsundurchlässige Struktur (182) umfasst, die in dem äußeren Gehäuse (178) angeordnet ist, die den ersten Reaktanzeinlass (179) und den Flüssigkeitsauslass (181) von dem Gasauslass (194) trennt, **dadurch gekennzeichnet, dass**
die im Wesentlichen gasdurchlässige/im Wesentlichen flüssigkeitsundurchlässige Struktur (182) einen Einlass (186), der wirksam mit dem ersten Reaktanzeinlass (179) des äußeren Gehäuses verbunden ist und einen Flüssigkeitsauslass (188) umfasst, der wirksam mit dem Flüssigkeitsauslass (181) des äußeren Gehäuses verbunden ist.

7. Eine Reaktionskammer gemäß Anspruch 6, bei der die im Wesentlichen gasdurchlässige/im Wesentlichen flüssigkeitsundurchlässige Struktur (182) ein inneres Gehäuse umfasst, das zumindest teilweise aus einem im Wesentlichen gasdurchlässigen/im Wesentlichen flüssigkeitsundurchlässigen Material gebildet ist.

8. Eine Reaktionskammer gemäß Anspruch 7, bei der der zweite Reaktant in dem inneren Gehäuse gespeichert ist.

9. Eine Reaktionskammer gemäß Anspruch 7, bei der das äußere Gehäuse (178) eine Innenoberfläche umfasst, das innere Gehäuse eine Außenoberfläche umfasst, und ein Raum (192) zwischen der Innenoberfläche des äußeren Gehäuses und der Außenoberfläche des inneren Gehäuses definiert ist, der in Kommunikation mit dem Gasauslass (194) des äußeren Gehäuses ist.

10. Eine Reaktionskammer gemäß Anspruch 6, bei der die im Wesentlichen gasdurchlässige/im Wesentlichen flüssigkeitsundurchlässige Struktur (182) ein poröses wasserabweisendes Membranmaterial umfasst.

## Revendications

1. Cartouche pour combustible comprenant :
un réservoir pour le combustible (102) ;
une chambre de réaction (104) qui stocke un catalyseur ;
une région ouverte (108) qui relie le réservoir pour le combustible 102) à la chambre de réaction (104) ; et
une structure passive (128, 130) située à l'intérieur de la région ouverte (108) adaptée pour s'opposer à un écoulement fluide du réservoir pour combustible (102) à la chambre de réaction (104).

2. Cartouche pour combustible telle que revendiquée à la revendication 1, dans laquelle la chambre de réaction (104) comprend un orifice d'admission (186) relié de manière opérationnelle au réservoir pour combustible (102) et un orifice d'échappement du gaz (194).

3. Cartouche pour combustible telle que revendiquée à la revendication 2, comprenant en outre :
un sous-produit formant réservoir (106) incluant un orifice d'admission pour un liquide ;
dans lequel la chambre de réaction (104) inclut un orifice d'échappement du liquide (181) relié de manière opérationnelle à l'orifice d'admission du liquide du sous-produit chambre.

4. Cartouche pour combustible telle que revendiquée à la revendication 1, dans laquelle la région ouverte (108) est définie par un élément tubulaire.

5. Cartouche pour combustible telle que revendiquée à la revendication 1, dans laquelle la structure passive (128, 130) crée des forces capillaires qui s'opposent à un écoulement du fluide.

6. Chambre de réaction pour une utilisation avec au moins un premier et un deuxième réactants, la chambre de réaction incluant une coque externe (178), définissant un premier orifice d'admission de réactant (179), un orifice d'échappement du liquide (181) et un orifice d'échappement du gaz (194), et une structure sensiblement perméable au gaz/ sensiblement imperméable au liquide (182) située dans la coque externe (178) qui sépare le premier orifice d'admission du réactant (179) et l'orifice d'échappement du liquide (181) de l'orifice d'échappement du gaz (194), **caractérisé en ce que** :
la structure sensiblement perméable au gaz/sensiblement imperméable au liquide (182) inclut un orifice d'admission (186) relié de manière opérationnelle à l'orifice d'admission du premier réactant de la coque externe (179) et un orifice d'échappement de liquide (188) relié de manière opérationnelle à l'orifice d'échappement de la coque externe (181).

7. Chambre de réaction telle que revendiquée dans la revendication 6, dans laquelle la structure sensiblement perméable au gaz/ sensiblement imperméable au liquide (182) comprend une coque interne formée au moins de manière partielle à partir d'une matière sensiblement perméable au gaz/ sensiblement imperméable au liquide.

8. Chambre de réaction telle que revendiquée dans la revendication 7, dans laquelle le deuxième réactant est stocké à l'intérieur de la coque interne.

9. Chambre de réaction telle que revendiquée dans la revendication 7, dans laquelle la coque externe (178) inclut une surface interne, la coque interne inclut une surface externe et un espace (192) est défini entre la surface interne de la coque externe et la surface externe de la coque interne lequel est en communication avec l'orifice d'admission de gaz de la coque externe (194).

10. Chambre de réaction telle que revendiquée dans la revendication 6, dans laquelle la structure sensiblement perméable au gaz/ sensiblement imperméable au liquide (182) comprend une membrane en matière poreuse hydrophobe.
